# EUROPEAN PATENT SPECIFICATION

(11) **EP 1 815 936 B1**
(45) Date of publication and mention of the grant of the patent: **11.11.2009**
(21) Application number: 07250067.1
(22) Date of filing: 09.01.2007
(51) Int. Cl.: B23K 15/00, B23K 26/34, B22F 3/105, B29C 67/00

(54) **Methodof producing an object including testing and/or analysing of object**
Verfahren zur Herstellung eines Werkstückes mit Überprüfung des Objektes
Procédé de fabrication d'un objet avec examen de l'objet

(30) Priority: 01.02.2006 GB 0601982
(43) Date of publication of application: 08.08.2007
(73) Proprietor: Rolls-Royce plc, 65 Buckingham Gate London SW1E 6AT (GB)
(72) Inventor: Clark, Daniel, Belper Derbyshire, DE56 1GS (GB); Wright, David Cameron, Loughborough Leicestershire, LE11 2ED (GB)
(74) Representative: Gunn, Michael Alan

(56) References cited:
- EP-A1- 1 418 013
- WO-A-92/08567
- US-A1- 2001 014 403
- US-A1- 2002 046 464
- US-A1- 2004 173 946
- US-A1- 2005 173 380

## Description

The present invention relates to a method of producing an object in particular three dimensional objects and single layer structures such as eddy current coils.

The production of three-dimensional objects using layer construction techniques, such as direct laser deposition (DLD), is well known. In such techniques, a computer assisted design (CAD) model of the three-dimensional object to be produced is initially generated and divided into a plurality of discrete layers. The resultant layered CAD model is then used to control apparatus to form the desired three-dimensional object by building it layer by layer.

Such techniques will produce the objects, allow ready production of prototypes as well as components which are formed from metal alloys and other materials which cannot readily be formed by other processes. By their nature, these objects are relatively expensive and, therefore, rejection at later stages of manufacture and forming will at the very least be inconvenient and costly. The objects are checked for acceptability in relation to contaminates, inclusions and defects such as cracking and pores and areas of limited fusion or consolidation. Unfortunately, such non-destructive testing techniques as previously provided include x-ray analysis and ultrasound inspection but generally of the component as finally formed. It will be understood by the stage of final formation corrective action to eliminate the defect or early rejection of the object in part form will not be possible.

US patent application US2004/0173946, which is considered to represent the most relevant state of the art, describes a process for producing three-dimensional bodies by a layer buildup process, in which an optical device inspects each layer for differences of light intensity or colour that might indicate defects.

US patent application US2005/0173380 describes a complex method and apparatus for producing components by deposition of successive layers, in which areas of material identified as defective can be machined out and refilled.

US patent application US2002/0046464 describes a process for laser cladding of part of a component, in which the clad metal is machined to form a control surface, the control surface is then inspected to detect any defects, and the component is re-clad if necessary.

According to the invention, there is provided a method of forming an object by deposition as set out in the claims.

Embodiments of the present invention will now be described by way of example only with reference to the accompanying drawings, in which:-
Fig. 1 is a schematic depiction of a deposition method;
Fig. 2 is a schematic depiction of a deposition process to form an object;
Fig. 3 is a schematic cross-section, portion of an object formed;
Fig. 4 is a perspective view of an inspection site;
Fig. 5 is a plan view of an inspection site in a different object geometry.
Fig. 6 is a schematic plan view of acoustic wave surface travel for laser detection; and,
Fig. 7 is a plan view illustrating acoustic wave focussing.

Processes for forming objects and, in particular, three-dimensional objects and single layer structures by appropriate deposition processes are known. Generally, a layer of material in the form of a powder is appropriately laid and a device for consolidation is utilised in order to build an object by consolidating consecutively layers of material in order to form the object with the desired profile. By such an approach, one-off prototype object components can be formed or objects which are made from alloys or other materials which are not conveniently formed by other processes can be created or a base object form can have features added to it by an appropriate deposition process to form a hybrid component.

As with all processes there is a potential for failure in terms of creating an object which includes too large sized contaminates or inclusions or cracks or pores for accepted operational performance criteria. In such circumstances, the object component must be tested in order to determine whether it meets a threshold of acceptability. As indicated above, if this testing is performed during later stages of object component forming, there will be significant cost implications if the component object is rejected. By the above approach it may also be possible to have a feedback process developed to avoid or reduce future rejections of objects and structures.

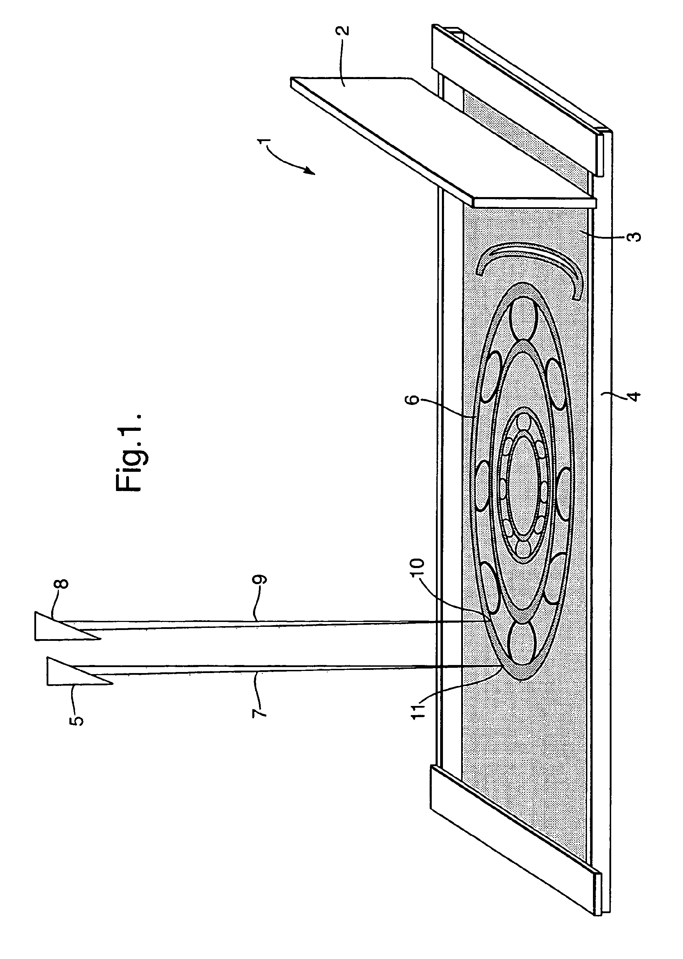

Fig. 1 is a schematic illustration of an apparatus 1 utilised in order to provide objects. Thus, the apparatus 1 includes a device 2 to deposit a layer of material 3. Initially, this layer of material 3 is laid upon a base 4. The material used to form the layer is generally a powder presented as a substantially flat layer. Typically, the powder will be of a similar type throughout the object or structure. However, where necessary layers of different material may be deposited and consolidated. The present apparatus will be able to differentiate between the layers of different material type.
A consolidation device 5 acts to create an object 6. by interacting with the layer of material 3 in order to consolidate that material and other layers of material subsequently laid one upon the other in order to create the object 6. This object is three-dimensional and as can be seen will normally be consolidated with the base 4 although generally the object 6 will either be releasable from the base 4 or the base 4 may be cut or otherwise taken away, such as by etching, from the object 6. The consolidation device 5 will generally take the form of a laser which acts to melt or sinter or fuse or otherwise consolidate the layers of material 3 together. The layers are consolidated one upon the other until the object 6 profile is created. In such circumstances, relatively complex three-dimensional shapes can be formed in the object 6 profile as required. Particularly, when the consolidation device 5 is in the form of a laser, it will be understood that a laser beam 7 will be projected towards the layer of material 3 so that the beam 7 is only incident and irradiates part of the layer 3 in order to create consolidation of the material forming that layer 3. Again, in such circumstances, by consolidating several layers 3 with an appropriate incident beam 7 on those layers, an object 6 profile can be achieved. Normally, the beam 7 rasters across a width of the layer 3 in an appropriate path to create by material consolidation the profile of the object 6. Once each layer 3 has been appropriately consolidated by the device 5 through the beam 7, a further layer of material will be placed over the consolidated layer by the deposition device 2 and the process repeated until an appropriate profile for the object 6 is achieved.

In the consolidation process, it will be understood that malformation may occur. This malformation may be due to impurities within the material from which the layer 3 is formed or transient variations in the beam 7 or any other potential problem. In such circumstances, impurities or inclusions or cracks may occur within the profile of the object 6. It will be understood that these defects in the object 6 may render that object operationally useless such that the object must be scrapped or possibly recycled. In either event, there will be inconvenience and potentially high costs.

A non-destructive testing process is provided to provide analysis of the object 6 over an appropriate depth of that object 6. A non-destructive testing device 8 is provided in order to test and inspect the object 6. The non-destructive testing device 8 may provide analysis of the object 6 by a number of processes including ultrasound inspection and electrical eddy current inspection. It will also be understood that the non-destructive testing and inspection device 8 may perform more than one analytical test upon the object 6. Typically, analysis will be through an excitation and response process achieved through a beam path 9.

The non-destructive testing device 8, through the analytical interrogation beam 9, will generally act at an inspection site 10 which is about a consolidation zone 11 provided by the beam 7. In such circumstances, normalisation of the consolidation process provided by the beam upon the materials from which the layers 3 are formed may have equalised them into a near-final form for appropriate inspection and testing. Thus, if the consolidation process effectively melts or heats the material from which the layer 3 is formed, it will be understood that the object 6 in that area may have cooled sufficiently to allow appropriate non-destructive testing and inspection by the beam 9. Similarly, it will be appreciated that the consolidation process may initiate a chemical reaction so that sufficient time should be provided for that chemical reaction to be completed before the non-destructive testing and inspection process. In such circumstances, the inspection site 10 will be about the consolidation zone 11 but generally a few centimetres, typically 2 to 5 centimetres, displaced away from the zone 11 and behind the path of consolidation by the beam 7.

By appropriate positioning of the inspection site 10 and the consolidation zone 11, the present method and apparatus 1 may allow for continuous non-destructive testing and inspection or analysis of the component 6 as it is formed by consolidation of layers 3. According to the present invention, it is provided non-destructive testing and inspection after each layer 3 of the object 6 has been consolidated.

Rather than have a separate consolidation device 5 and non-destructive testing/inspection device 8, it may be possible to incorporate the devices into the material layer depositing device 2. There may be a non-destructive sensor array such as an eddy current array in a power levelling device or a laser head for a powder bed or blown powder laser and powder injection nozzle.

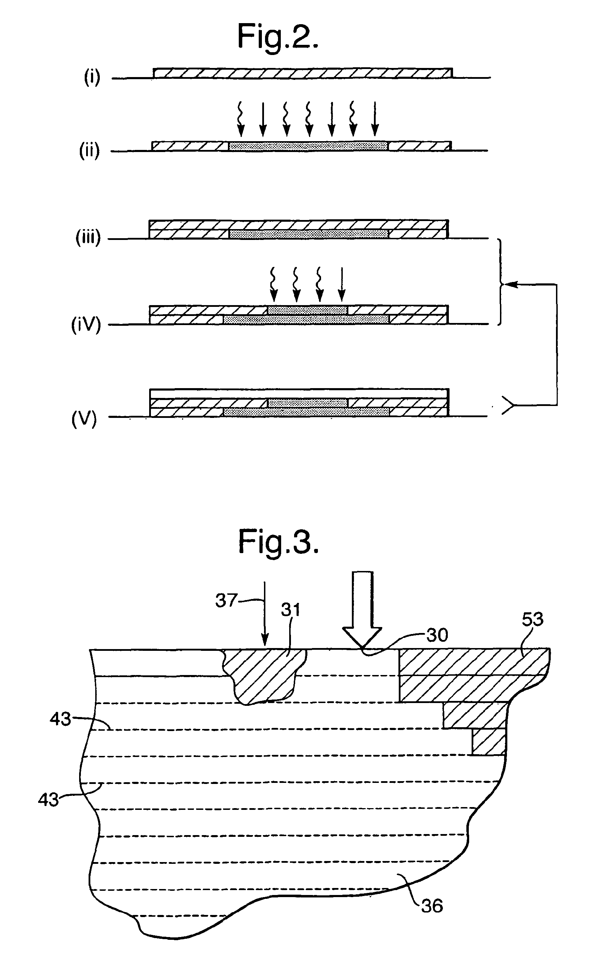

Fig. 2 provides a schematic illustration of a side cross-section with regard to the process of forming an object by a deposition method. Thus, initially, as depicted in Fig. 2 (i) a layer of material 33 is laid upon a base 34. Particular sections 33a of the layer 33 are irradiated by a laser in order to consolidate the material of that layer into a solid form as depicted in Fig. 2 (ii). A further layer of material 133 is laid upon the first layer 33 as depicted in Fig. 2 (iii). A further particular portion 133a is irradiated or otherwise consolidated in order to build up an object from layers 33a, 133a. It will be understood that the materials of the layers 33, 133 may be different and consolidation may be achieved by different means than irradiation with a laser. The process steps outlined in Fig. 2 (iii) and Fig. 2 (iv) are repeated (Fig. 2 (v), arrow "R") until the object is formed.

In addition to the above, it will be understood that an electron beam could be used in an ultrasonic consolidation.

It will be understood that material which is not consolidated may be removed in a subsequent process once the component is formed. Furthermore, overlaying layers of material may only be provided in the areas to build up the object by consolidation with previous layers of material.

In the process of consolidation of the layers 33, 133 and subsequent layers, it will be understood that it is possible for there to be contamination of both the material as laid as well as through atmospheric settling of dust, etc. before laying of subsequent layers. In such circumstances, the deposition process generally occurs in an inert environment such as Argon and under clean conditions. Nevertheless, it is possible for there to be defects formed in the object through the deposition process as outlined in Figs. 1 and 2. It is early identification of such failures in the deposition process which can be achieved by certain aspects of the present method and apparatus. In such circumstances, the defects may be corrected or the object component scrapped before further process and deposition.

Fig. 3 provides a schematic illustration through an object as formed in accordance with a deposition process. Thus, the object 36 is formed by consolidation of layers of material identified by broken lines 43 in the object 36 and by solid lines in the unconsolidated layers of material 53. The consolidation beam 7 moves across the material as shown by arrow 37 and, as can be seen, acts over a consolidation zone 31 in order to form the object 36. Around but displaced from the consolidation zone 31 is an inspection site 30 at which, as shown by arrowhead 39, a non-destructive test of the object 36 is achieved. This inspection site 30 is typically located in order to provide an accurate indication as to the status of the object 36 without distortion as a result of the consolidation processes.

Non-destructive testing and inspection in accordance with the present invention will typically take the form of ultrasound tests and electrical eddy current tests. These testing regimes provide both volumetric and surface analysis of the object 36. Clearly, the depth and scope of the non-destructive testing can be adjusted dependent upon positioning of the non-destructive testing device but generally testing will be completed to a depth of at least the thickness depth of one layer of material deposited in accordance with the deposition process as described above. In such circumstances, consolidation of the upper layer with the immediately overlaid bottom layer can be achieved. More generally, consolidation of several layers of material will be analysed by the non-destructive testing device.

A non-destructive inspection and testing device may sit upon the same manipulation arm as the deposition device 2 or consolidation device 5, as depicted in Fig. 1, particularly if the inspection process is continuous with the deposition and consolidation process.

The depth of inspection and non-destructive testing will depend upon the process for testing and inspection used, the step height in terms of the deposition depth of material in each layer and, where used, ultrasound wave properties in the materials concerned. Typically, the inspection depth will be in the order of 20 to 300 microns with step/layer heights ranging between 20 to 100 microns or ultrasound frequencies in the order of 10 to 100 MHz or higher subject to material process geometry evaluation requirements and availability of such isolators. As indicated, incremental inspection and testing is continuous. In the above circumstances, it will be appreciated that the non-destructive testing and inspection device will act over a relatively small inspection site with dimensions in the order of a few square millimetres and, therefore, the resolution of inspection will be improved although each of these inspection sites will be incremental in terms of providing a whole object component volume inspection with significantly higher resolution than previous post-forming inspection processes, including x-rays.

The method and apparatus will allow integration with existing automation with regard to material layer deposition and consolidation. It will be understand that, particularly with regard to consolidation of layers, it is important to provide positional co-ordination and orientation to enable the object to be formed. Such positional co-ordination and orientation will be automated and, therefore, through a feed-back control mechanism with the present inspection and testing method and apparatus, it will be understood that adjustments to the consolidation and/or material deposition processes may be achieved to improve deposition accuracy and quality and so improve the final object form, and material characteristics. The feedback control mechanism may involve neural network control of parameters for real time optimisation.

As indicated above, the non-destructive testing processes in accordance with the present invention will generally be ultrasound and optionally electrical eddy current inspection

In the case of ultrasound, the ultrasound signal will be generated by a laser heating a grid-type pattern on the surface, this heating would be rapid and pulsed. Potentially the same laser optics or some system elements could be common (i.e. fibre optic delivery and focussing mirrors) with the two systems (DLD and ultrasound generation/detection). The laser based ultrasound system would probably need a different laser source and a specification which is different (high frequency pulsation required - for example, in excess of 500 kHz) although the laser wavelength could be common - hence the optical interchangeability. The laser ultrasound system could be located 10mm to 15mm above the deposited surface of the growing component depending upon the component surface roughness. The laser has pulse durations which last of the order of 1ns, energies would be of the order of 10W/cm⁻¹. The laser detectors could work on either reflected beam deflection or interferometry.

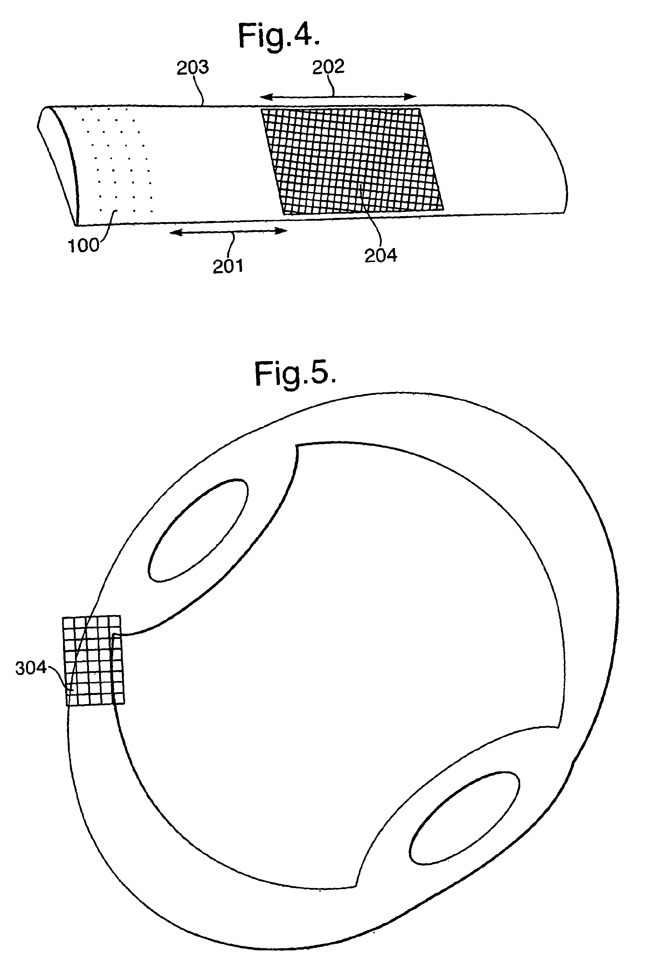

Figs. 4 and 5 illustrate inspection sites in terms of grids to define ultrasound generation spot patterns using a laser according to the present invention. Scanning will be incremental, with overcalling scanned areas of proportions as appropriate. The laser pulses are non ablative ensuring optical cleanliness and consistency without the non destructive testing induced secondary contamination.

The ultrasound generation spot pattern would probably be a regular array, but could be an irregular pattern so long as the pattern was known precisely.

The detection scanned area could be at a distance of 1mm removed from the emissions region, or could overlap and go beyond the emissions array envelope.

A typical pulse frequency will be 80MHz, (beam power will be approximately 1 Watt or more). Vibrating patterned arrays would be created for example by diffractive optics or gratings in the light pattern or by movement of mirrors. This would depend on a continuously moving mirror (moving at a set rate). Alternatively, pulses could be fired at a diffractive optical systems to simultaneously create the pulse pattern. It may be possible to use high speed tailored light beam modulation.

In the above circumstances with a material layer depth in the order of 20 - 50 microns and a consolidation band within the order of 1mm there will generally be, as indicated above, up to a 1mm spacing distance 201 between the laser beam spots 100 presented to a layer 203 and an inspection or detection site 204. The distance 201 will depend upon a number of factors as outlined above including material type, laser intensity etc. The length 202 of the inspection site 204 will again be determined by operational factors.

The ultrasonic scanning produced by the laser tailored light distributors 100 will be analysed by scanning as indicated by the height and width of the site 204. Alternatively, a travelling stereo-optical microscope with image analysis software could perform this function. Speckle interferometry can be used for height measurement within the deposited layer. Speckle interferometry could also indicate stresses induced locally by different consolidation parameters.

In Fig. 5 a plan view of a different component cross-section is identified. In such circumstances an inspection site 304 will again take the form of a grid from which ultrasonic responses are provided from initial ultrasonic stimulation. The scan area defined by the inspection site may be less than the grid 304.

In the case of electrical eddy current inspection, the sensor would be approximately 0.1mm from the deposited surface, for ultrasound the emitter and sensor could be further away. Generally, the closer the better but without rubbing. Discriminators would be one or more of the following: the nature of the components (geometry and material or material combination), the step height, the rate of temperature build up, the presence of free or adherent powder or spatter from the process (which would create process signal noise), the nature of articulation of the inspection device and the chamber.

A levelling knife for powder bed levelling could have an eddy current array built into it.

In the case of an eddy current based system, 1mm diameter probes (for example) could be arranged as an (over-lapping) chain around the deposition head as a circumferential array - this would give great flexibility to the deposition head orientation. By this complex overlapping structures, i.e. with corners or sharp changes in direction would present no problem as the deposition head would be surrounded by a ring of transducers which would not greatly add to the bulk or weight of the deposition head. The frequency range of the eddy current system could be 500 kHz to 2 MHz. This technique would also allow the material conductivity and by implication chemistry to be evaluated.

As indicated above, generally the deposition process as well as the non-destructive testing will be provided in an inert atmosphere, such as under an argon gas environment.

In order to improve defect resolution, it will be understood that the non-destructive testing device may comprise a number or array of sensors at different orientations and angles, such that fine narrow defects in the form of cracks, lack of fill or lack of fusion, can be identified over a wider range of orientations than a single detector and inspection device. It will also be understood that where an array of non-destructive testing devices are used that these devices may be sequentially activated again to provide greater flexibility and resolution with regard to non-destructive testing, particularly in terms of the analysed volume which is swept by the testing regime.

It will be understood that with previous processes, particularly using X-ray inspection, there may be problems with regard to manual variation and manipulation. The present method as indicated allows a more highly automated approach to be taken which in turn will provide further consistency with regard to inspection depth of a known geometry in comparison with previous approaches. Furthermore, as the present method allows in situ inspection of the object as it is formed, it will be understood that the potential errors as a result of operations such as handling, positioning and cleaning of the component for inspection will be substantially eliminated.

As indicated above, the present method may be utilised in order to allow feedback control. In such circumstances, adjustments may be made to the deposition as well as consolidating processes to improve object component manufacture. Alternatively, when problems are identified, further deposition and consolidation may be stopped until the problem is solved, leaving an otherwise acceptable part-formed object component in a state for further processing to an acceptable form rather than requiring scrapping. The present method allows greater confidence with regard to deposition processes for object component formation in comparison with previous approaches which inherently had uncertainty with regard to the acceptability of the component until final inspection.

The present method having a consistent inspection volume means that the inspection process could be optimised for the depth, for example, maximum sensitivity within 600 microns of the surface (depths of 1.6mm are quoted as feasible for aluminium). So long as the swept (inspected volume) was wider than the bead width (bead width typically 0,3 to 10mm for DLD) the grid array (scan area) area for the ultrasound generator can be 10 x 20mm or smaller in area, which seems quite feasible, the inspection system would be independent of the restrictions of the final component geometry. The process is reliant on the fine step height relationship for consistent, precise (incremental) volumetric inspection.

The methodology would allow more than simple inspection for specific flaw types. In particular, material evaluation could be performed in situ. For example, aerospace structures (forgings, castings, etc.) have a requirement for chemical analysis and a simple mechanical batch test, the primary reason for this is a cross-check that the correct aerospace grade material has been used. Developments in ultrasound response analysis (based on time of signal response which allows velocity calculation) allow determination of some mechanical property measurements such as Young's Modulus. This technique could potentially be used to obviate the need for additional chemical/mechanical testing.

Whilst scanning the layers for flaws and inconsistencies in processing, the system could be used to cross-check (via software) the dimensional position of the hot deposited layer, this would allow more accurate geometric modelling, validation and prediction.

As indicated above, the present non-destructive testing method may perform such testing utilising one or more non-destructive testing techniques. Thus, ultrasound may be combined with non-destructive testing through electrical eddy current testing both simultaneously and through sequential in situ testing within an object component deposition chamber. Furthermore, the present method could be combined with a dimensional analysis system (for example speckle interferometry or 3D laser scanning or non laser stereo optic systems) as another carousel option. The dimensional analysis would be performed typically on the cooled component to determine the ambient temperature (fixture held or free state) geometry while the component was still in a known location - thus saving handling, positioning and the need to determine and align datum points. The laser or other measuring apparatus may enable accurate determination of laid track width.

For some applications the hot component position location would be useful - for example when building spurs/arms/overhangs, etc. The system could be made modular as the common feature would be the non-contact data capture, the automation (manipulation and robotic arm) and knowledge of the components' predicted spatial position.

The actual non-destructive testing processes utilised will depend upon operational requirements. Nevertheless, it will be appreciated that very high resolution inspection can be achieved. Typically, inspection will at least pass through one layer of deposited material and so will inspect through deposited layer and underlying layers affected by heat.

It will be understood that eddy currents will be generated by a relatively high powered induction coil brought adjacent to the inspection site. This induction coil can be built into the consolidation or deposition devices with appropriate sensors to detect eddy current responses.

It will be understood that the position of an induction coil is important and, therefore, generally laser guiding will be provided for accurate location and in order to generate a surface topography for the deposit layer when consolidated. Precision is required relative to the component and absolutely in space.

Another favoured non-destructive testing process is in relation to non-contact ultrasound. In such circumstances, ultrasound is generated within the deposited and consolidated layers of material. This ultrasound will be generated by delivering tailored light distributions via a laser, according to the present invention, at the surface about the inspection site. In such circumstances, the surface will heat rapidly and cause elasto-acoustic waves in the material. These acoustic waves when they interact with discontinuities, cracks, pores or otherwise, will create a destructive/constructive interference pattern which can be determined by sensing the echo response from the surface.

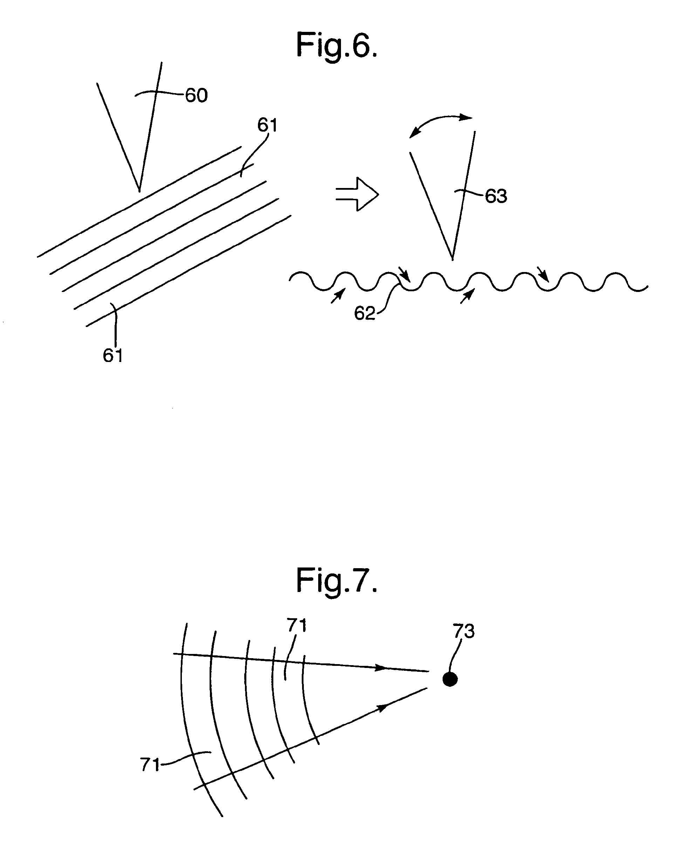

As indicated above, the form of non destructive testing according to the present invention is through a laser generated non contact ultra sound analysis. A laser generated light pattern is projected towards the layers of material. Fig. 6 schematically illustrates such non contact ultra sound or acoustic interrogation of layers 61 of material. The laser 60 creates an acoustic surface wave pattern by localised interaction with the surface of the layer 61. This pattern 62 will radiate from the point of contact by the beam 60 upon the layer 61. Generally, a separate laser which may not be of the same wavelength as the wave inducing laser, will be utilised in order to analyse the surface acoustic wave pattern 62. According to the present invention there is an interrogation and return laser interaction 63. The laser beam is reflected and so responds to passing acoustic waves producing spot movement or other speckle patterned responses indicative of the wave 62 interaction with the surfaces of the layer 61. The inspected area will be simultaneously or almost simultaneously illuminated by the laser 63 for consistency. Generally, the interrogation laser interaction 63 will be in excess of 80 MHz in order to provide adequate resolution with regard to identifying defects in the layer 61.

Different laser patterns are according to the present invention produced to generate acoustic laser variations in direction and wavelength. By careful analysis of the results for each different laser pattern, defects and material property data for the layers 61 can be retrieved.

It may also be possible to focus the acoustic waves if the layers are appropriately deposited. Fig. 7 illustrates layers 71 subject to an interrogation laser generating surface acoustic waves. As the layers are curved it will be appreciated that the acoustic waves will be focussed towards a reception point 73. Interference and refraction patterns at this reception point and previously may be utilised in order to provide further analysis of the layers and objects or structures formed.

It will also be appreciated that the laser may be scintillated with variations in a slower pulse sequence and shaping over time to allow a sweep across a range of points to give a swoop zone/volume response pattern for further interrogation of the layers of material.

Generally, electrical eddy current inspection will be good for detecting cracks within a consolidated component object, whilst ultrasound non-destructive testing will be better at identifying cores/particles (inclusions) within the deposited component object.

Typically, non-destructive testing will occur in a fraction of a second and, therefore, will not affect the material composition itself.

With regard to use of lasers, it will be understood that the laser as indicated will be rastered and scanned across the width of the deposition in order to provide consolidation. Such movement of the laser beam may be achieved through defraction optics or a moving mirror to provide a continuous beam for consolidation of the material forming the layers into a consolidated structure. In any event, it will be understood that the laser will be relatively focused and be presented to the surface for a short period of time. In such circumstances, two lasers could be used, one red (Nd-YAG) for consolidation and one green (He-Ne) for detection. Generally, in such circumstances, the laser will be moved relatively quickly such that heating is within the elastic range of a material to generate the shock wave for sound echo response.

In terms of the non-destructive testing processes, it will be appreciated that in addition to cracks, contaminants and inclusions these testing processes may provide material evaluation, height variations in the deposited layer, width measurements, profile control, flatness and surface finish to each deposited and consolidated layer as the object is formed. Typically, the inspection depth will be in the order of 300 - 500 microns.

With regard to ultrasound non-destructive testing the ultrasound generated could be the same wavelength as the deposit arrangement in order to allow shared laser optics, a parallel mounting relationship and beam manipulation. The inspection laser for ultrasound generation would be at very high discrete pulse frequencies in the order of 80 MHz however, while the deposition beam is pulsed would be in the range of 0 - 500 Hz. In short one signal could be superimposed over the other to allow ultrasonic non-destructive testing at the edge of the consolidation site or weld pool where that consolidation is through the laser melting the deposited layer into consolidation with an underlying layer. If the inspection site is directed at the trailing edge this could disrupt grain growth resulting in a finer grained less textured micro structure. This approach would be beneficial with regard to blown powder deposition but would rely on laser beam angle or a sufficiently low powder feed rate to be operational. In short, spare time between disposition pulses could be potentially used for provision of a non-destructive testing and potentially material improvement.

By aspects of the present invention a method is provided which can achieve more rapid manufacture with increased quality and homogeneity for enhanced integrity with regard to structures and objects formed. The method allows an already rapid manufacturing process to be made even faster at a lower cost with more reliability in terms of consistent delivery. The method also removes the problematic element with regard to detecting defects in large structures, fabrications and objects.

## Claims

1. A method of producing an object by deposition, the method comprising:
i) depositing a layer (61) of material;
ii) irradiating selected areas of the layer to consolidate the material in the selected areas;
iii) non-destructively analysing the properties of the layer (61) by inducing a laser-generated non-contact ultrasonic wave pattern (62) in the layer (61) and detecting the wave (62) interaction with the surface of the layer (61);
iv) successively repeating steps i) to iii) to produce the object
wherein different layer generated ultrasonic wave patterns (62) are produced so that the analysis of the results for each different layer pattern (62) retreives defects and material properties of the layer(s) (61).

2. A method as claimed in claim 1, in which the analysis further comprises an electrical eddy current analysis of the layer (61).

3. A method as claimed in claim 1 or claim 2, in which the consolidation is achieved by moving a laser beam across the layer (61), and in which the method further comprises controlling the properties of the laser beam in response to the analysed properties of the layer (61).

4. A method as claimed in claim 3, in which the power or speed of movement or focus of the laser beam is controlled.

## Patentansprüche

1. Verfahren zur Herstellung eines Gegenstandes durch Ablagerung, umfassend:
i) die Ablagerung einer Materialschicht (61);
ii) die Bestrahlung gewählter Bereiche der Schicht, um das Material in den gewählten Bereichen zu verfestigen;
iii) die zerstörungsfreie Analyse der Eigenschaften der Schicht (61) durch Induzierung eines durch Laser erzeugten berührungslosen Ultraschallwellen-Musters (62) in der Schicht (61) und durch Ermitteln des Zusammenwirkens der Welle (62) mit der Oberfläche der Schicht (61);
iv) die aufeinanderfolgende Wiederholung der Schritte i) bis iii) zur Herstellung des Gegenstandes;
wobei unterschiedliche schichtweise erzeugte Ultraschallwellen-Muster (62) derart erzeugt werden, dass die Analyse der Ergebnisse für jedes unterschiedliche Schichtmuster (62) Defekte und Materialeigenschaften der Schicht(en) aufzeigt.

2. Verfahren nach Anspruch 1, bei welchem die Analyse weiter eine elektrische Wirbelstromanalyse der Schicht (61) aufweist.

3. Verfahren nach den Ansprüchen 1 oder 2, bei welchem die Verfestigung durch Bewegung eines Laserstrahls über der Schicht (61) erreicht wird und bei welchem das Verfahren weiter die Steuerung der Eigenschaften des Laserstrahls gemäß den analysierten Eigenschaften der Schicht (61) umfasst.

4. Verfahren nach Anspruch 3, bei welchem die Leistung oder die Bewegungsgeschwindigkeit oder die Fokussierung des Laserstrahls gesteuert wird.

## Revendications

1. Procédé de production d'un objet par dépôt, le procédé consistant à :
i) déposer une couche (61) de matériau ;
ii) irradier des zones sélectionnées de la couche pour consolider le matériau dans les zones sélectionnées ;
iii) analyser de manière non destructive les propriétés de la couche (61) en induisant un motif d'onde ultrasonore sans contact généré par laser (62) dans la couche (61) et détecter l'interaction de l'onde (62) avec la surface de la couche (61) ;
iv) répéter successivement les étapes i) à iii) pour produire l'objet ;
dans lequel différents motifs d'onde ultrasonore générés par laser (62) sont produits de sorte que l'analyse des résultats pour chaque motif de laser (62) différent récupère les défauts et les propriétés des matériaux de la ou des couches (61).

2. Procédé selon la revendication 1, dans lequel l'analyse comprend en outre une analyse électrique par courant de Foucault de la couche (61).

3. Procédé selon la revendication 1 ou la revendication 2, dans lequel la consolidation est réalisée en déplaçant un faisceau laser sur la couche (61), et dans lequel le procédé comprend en outre le contrôle des propriétés du faisceau laser en réponse aux propriétés analysées de la couche (61).

4. Procédé selon la revendication 3, dans lequel la puissance ou la vitesse de déplacement ou la focalisation du faisceau laser est commandée.
